(19) Europäisches Patentamt
European Patent Office
Office européen des brevets

(11) **EP 1 297 614 B1**

## (12) EUROPÄISCHE PATENTSCHRIFT

(45) Veröffentlichungstag und Bekanntmachung des Hinweises auf die Patenterteilung:
**30.05.2012 Patentblatt 2012/22**

(21) Anmeldenummer: **01955221.5**

(22) Anmeldetag: **27.06.2001**

(51) Int Cl.:
*H02M 3/335* (2006.01)  *H02M 1/42* (2007.01)

(86) Internationale Anmeldenummer:
**PCT/DE2001/002358**

(87) Internationale Veröffentlichungsnummer:
**WO 2002/003536 (10.01.2002 Gazette 2002/02)**

(54) **ELEKTRONISCHER WANDLER**

ELECTRONIC TRANSFORMER

CONVERTISSEURS ELECTRONIQUES

(84) Benannte Vertragsstaaten:
**BE DE FI FR GB**

(30) Priorität: **06.07.2000 DE 10032043**

(43) Veröffentlichungstag der Anmeldung:
**02.04.2003 Patentblatt 2003/14**

(73) Patentinhaber: **OSRAM AG**
**81543 München (DE)**

(72) Erfinder:
  • **FRANCESCUTTI, Ugo**
    **I-33070 Casara (IT)**
  • **FRANCK, Felix**
    **80333 München (DE)**

(74) Vertreter: **Raiser, Franz et al**
**Osram GmbH**
**Postfach 22 16 34**
**80506 München (DE)**

(56) Entgegenhaltungen:
**WO-A-88/00768    US-A- 5 790 389**

• **SEBASTIAN J: "IMPROVING POWER FACTOR CORRECTION IN DISTRIBUTED POWER SUPPLY SYSTEMS USING PWM AND ZCS-QR SEPIC TOPOLOGIES" PROCEEDINGS OF THE ANNUAL POWER ELECTRONICS SPECIALISTS CONFERENCE. MASSACHUSETTS, 25 - 27 JUNE, 1991, NEW YORK, IEEE, US, Bd. CONF. 22, 23. Juni 1991 (1991-06-23), Seiten 780-791, XP000278420 ISBN: 0-7803-0090-4**
• **JOVANOVIC M M ET AL: "REDUCTION OF VOLTAGE STRESS IN INTEGRATED HIGH-QUALITY RECTIFIER-REGULATORS BY VARIABLE-FREQUENCY CONTROL" PROCEEDINGS OF THE ANNUAL APPLIED POWER ELECTRONICS CONFERENCE AND EXPOSITION (APEC). ORLANDO, FEB. 13 - 17, 1994, NEW YORK, IEEE, US, Bd. 2 CONF. 9, 13. Februar 1994 (1994-02-13), Seiten 569-575, XP000467366**
• **LEE Y-S ET AL: "NOVEL SINGLE-STAGE ISOLATED POWER-FACTOR-CORRECTED POWER SUPPLIES WITH REGENERATIVE CLAMPING" IEEE TRANSACTIONS ON INDUSTRY APPLICATIONS, IEEE INC. NEW YORK, US, Bd. 34, Nr. 6, November 1998 (1998-11), Seiten 1299-1308, XP000870796 ISSN: 0093-9994**
• **COMANDATORE G. ET AL: "DESIGNING A HIGH POWER FACTOR SWITCHING CONVERTER PREREGULATOR WITH THE L4981 CONTINUOUS MODE" SGS THOMSON MICROELECTRONICS APPLICATION NOTE, 1997, XP002183394 ITALY**

**Beschreibung**

**Technisches Gebiet**

Die vorliegende Erfindung betrifft einen elektronischen Wandler mit einem Eingangskreis und einem Ausgangskreis, die über eine induktive Kopplung miteinander verbunden sind, wobei der Ausgangskreis aufweist eine erste und eine zweite Ausgangsklemme, zwischen denen eine Ausgangsspannung bereitstellbar ist, und wobei der Eingangskreis aufweist eine erste und eine zweite Eingangsklemme zum Anschließen einer Spannungsquelle, die zumindest einen Gleichspannungsanteil aufweist, eine seriell zwischen der ersten Eingangsklemme und einem ersten Anschluss der induktiven Kopplung angeordnete Serienschaltung aus einer Induktivität und einem Kondensator, wobei der Verbindungspunkt zwischen der Induktivität und dem Kondensator über einen elektronischen Schalter mit der zweiten Eingangsklemme verbunden ist und die Induktivität zwischen dem Verbindungspunkt und der ersten Eingangsklemme und der Kondensator zwischen dem Verbindungspunkt und der induktiven Kopplung angeordnet ist, einem zwischen der zweiten Eingangsklemme und dem zweiten Anschluss der induktiven Kopplung angeordneten Sensorwiderstand, sowie einer Steuerschaltung, der zumindest die Ausgangsspannung und die am Sensorwiderstand abfallende Spannung als Eingangssignale zuführbar sind, wobei die Steuerschaltung in Abhängigkeit der ihr zugeführten Eingangssignale den Schalter öffnet und schließt.

Sie betrifft weiterhin einen elektronischen Wandler mit einem Eingangskreis und einem Ausgangskreis, die über eine induktive Kopplung miteinander verbunden sind, wobei der Ausgangskreis aufweist eine erste und eine zweite Ausgangsklemme, zwischen denen eine Ausgangsspannung bereitstellbar ist, und der Eingangskreis aufweist eine erste und eine zweite Eingangsklemme zum Anschließen einer Spannungsquelle, die zumindest einen Gleichspannungsanteil aufweist, eine seriell zwischen der zweiten Eingangsklemme und einem ersten Anschluss eines Sensorwiderstands angeordnete Serienschaltung aus einer Induktivität und einem Kondensator, wobei der Verbindungspunkt zwischen der Induktivität und dem Kondensator über eine Diode mit dem zweiten Anschluss der induktiven Kopplung verbunden ist, der zweite Anschluss des Sensorwiderstands mit dem ersten Anschluss der induktiven Kopplung verbunden ist und die Induktivität zwischen dem Verbindungspunkt und der zweiten Eingangsklemme und der Kondensator zwischen dem Verbindungspunkt und dem ersten Anschluss des Sensorwiderstands angeordnet ist, einem zwischen der ersten Eingangsklemme und dem ersten Anschluss des Sensorwiderstands angeordneten elektronischen Schalter, einem zwischen der ersten Eingangsklemme und dem zweiten Anschluss der induktiven Kopplung angeordneten Speicherkondensator, einer Steuerschaltung, der zumindest die Ausgangsspannung und die am Sensorwiderstand abfallende Spannung als Eingangssignale zuführbar sind, wobei die Steuerschaltung in Abhängigkeit der ihr zugeführten Eingangssignale den Schalter öffnet und schließt.

Derartige Wandler sind unter anderem zum Betreiben von Niedervolt-Glühlampen und optischen Halbleitern, beispielsweise Leuchtdioden (LED) und ähnlichem geeignet.

**Stand der Technik**

Derartige Schaltungen sind bekannt und werden im Stand der Technik beispielsweise als DC/DC-Wandler mit Leistungen bis 100 W verwendet. Die Steuerschaltung wird zumeist durch ein PWM-IC realisiert, das Strom und Spannung überwacht, während der elektronische Schalter durch einen vertikalen Power-MOSFET realisiert ist.

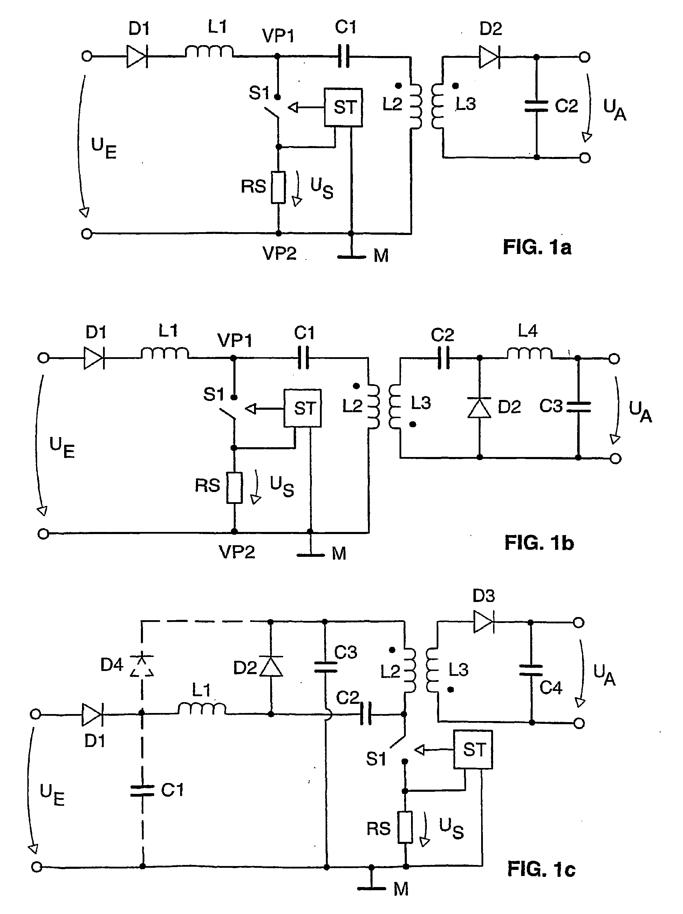

Figur 1 zeigt drei Ausführungsformen derartiger Topologien, wobei Fig. 1a einen sogenannten BIFRED (Boost Integrated Flyback Rectifier Energy Storage DC/DC-Converter)-Wandler, Fig. 1b einen sogenannten BIBRED (Boost Integrated Buck Rectifier Energy Storage DC/DC-Converter)-Wandler und Fig. 1c einen sogenannten PFC-Flyback-Wandler zeigt (PFC = Power Factor Correction = Leistungsfaktorkorrektur).

Ab dem Jahr 2001 ist die Einhaltung der Netzstrom-Harmonischen gemäß IEC 1000-3-2 für alle Beleuchtungseinrichtungen vorgeschrieben. Hierfür werden im Stand der Technik sogenannte PFC-Schaltungen eingesetzt. Einfach dargestellt ist der PFC genügt, wenn der dem Netz entnommene Strom proportional zur Netzspannung verläuft. Die in den Figuren 1a bis 1c dargestellten Schaltungen sind lediglich Eintaktwandler höherer Ordnung und müssen zu diesem Zweck eingangsseitig mit zusätzlichen PFC-Schaltungen beschaltet werden.

Zunächst wird jedoch auf die Schaltungen in den Figuren 1a bis 1c näher eingegangen. Die Eingangsseite des BIFRED- und des BIBRED-Wandlers ist hierbei identisch wie folgt aufgebaut: Zwischen zwei Eingangsklemmen liegt eine Eingangsspannung $U_E$ an, die zumindest über einen Gleichspannungsanteil verfügt. Der ersten Eingangsklemme folgt optional eine Diode D1 sowie eine Induktivität L1. Zwischen einem auf die Induktivität L1 folgenden ersten Verbindungspunkt VP1 und einem zweiten Verbindungspunkt VP2 ist eine Parallelschaltung angeordnet, deren einer Zweig eine Serienschaltung aus einem elektronischen Schalter S1 sowie einem Shunt-Widerstand RS umfasst. Der zweite parallele Zweig umfasst einen Kondensator C1 sowie die Induktivität L2. Der Shunt-Widerstand RS dient zur Ermittlung einer Größe, die in etwa dem Laststrom proportional ist, und zwar in Form einer Spannung US, die der Steuerschaltung ST zugeführt wird, welche den Schalter S1 steuert. Sofern der durch RS hindurchfließende Strom einen bestimmten Wert überschreitet, wird der Schalter S1 geöffnet, um eine Beschädigung der Schaltung selbst bzw. sich an die Sekundärseite anschließender Schaltungen zu vermeiden. Der in Fig. 1a dargestellte BIFRED-Wandler hat auf seiner Sekundärseite eine Induktivität L3, die zusammen mit der Induktivität L2 eine Zweiwicklungsspeicherspule bildet. Seriell zur Induktivität L3 ist eine Diode D2 angeordnet. An den Ausgangsklemmen wird eine Spannung $U_A$ bereitgestellt, wobei zwischen den Ausgangsklemmen ein Kondensator C2 angeordnet ist.

Der in Fig. 1b dargestellte BIBRED-Wandler hat auf seiner Sekundärseite eine Induktivität L3, die zusammen mit der Induktivität L2 einen reinen Wechselstromübertrager bildet. Seriell zur Induktivität L3 ist ein Kondensator C2 angeordnet, wobei die daraus gebildete Serienschaltung parallel zu einer Diode D2 liegt. Die daraus gebildete Parallelschaltung ist wiederum seriell zu einer Induktivität L4 angeordnet. Zwischen den Ausgangsklemmen, an denen die Ausgangsspannung $U_A$ bereitgestellt wird, ist ein Kondensator C3 angeordnet.

Der in Fig. 1c dargestellte PFC-Flyback-Wandler umfasst ebenfalls einen von zwei Eingangsklemmen gebildeten Eingang, an dem eine Spannung UE anliegt. Der einen Eingangsklemme folgt eine Diode D1 sowie eine Induktivität L1. Der Verbindungspunkt zwischen D1 und L1 kann über einen optionalen Kondensator C1 mit Masse verbunden sein. Auf die Induktivität L1 folgt zum einen die Serienschaltung einer Diode D2 und einer Induktivität L2, zum anderen ein Kondensator C2. Der Verbindungspunkt zwischen D2 und L2 ist über einen Kondensator C3 mit Masse verbunden. An diesem Verbindungspunkt kann optional auch eine Diode D4 angeschlossen sein, deren zweiter Anschluss mit dem Verbindungspunkt zwischen der Diode D1 und der Induktivität L1 liegt. Der Verbindungspunkt zwischen L2 und C2 ist über einen Schalter S1 und einen Shunt-Widerstand RS mit Masse verbunden. Die am Shunt-Widerstand RS abfallende Spannung US dient als Eingangssignal einer Steuerschaltung ST, die wiederum den Schalter S1 steuert. Die Sekundärseite des PFC-Flyback-Wandlers umfasst eine Induktivität L3, die zusammen mit der Induktivität L2 eine Zweiwicklungsspeicherspule bildet, wobei sich in diesem Fall ebenfalls, vgl. Fig. 1a, eine Diode D3 und ein Kondensator C4 anschließen und die an dem Kondensator C4 abfallende Spannung als Ausgangsspannung $U_A$ abgreifbar ist. Alternativ (nicht dargestellt) kann die Sekundärseite auch entsprechend der Sekundärseite von Fig. 1b ausgebildet sein. Die jeweilige Masse ist in den Figuren 1a bis 1c mit M bezeichnet.

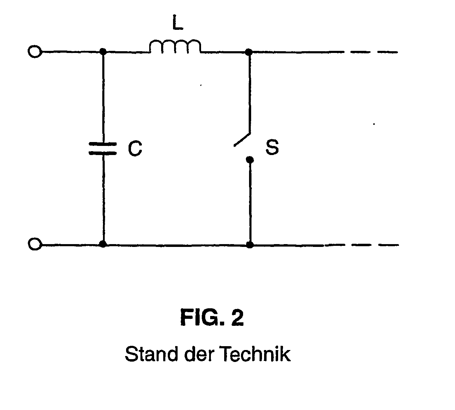

Fig. 2 zeigt die aus dem Stand der Technik bekannte Grundstruktur einer PFC: sie umfasst einen Kondensator C, eine Induktivität L sowie einen Schalter S.

Die Dokumente "Analysis and Design of a Practical Discontinuous-Conduction-Mode BIFRED Converter" (Michel Willers et al, IEEE Transactions on Industrial Electronics, vol 46,. No. 4 August 1999) und "An Alternative Approach to Synthesizing Single-Stage Converters with Power Factor Correction Feature" (Tsai-Fu Wu et al, IEEE Transactions on Industrial Electronics, vol 46,. No. 4 August 1999) offenbaren zwei elektronische Wandlern welche, Beziehungsweise, die Merkmale der Oberbegriffe von Anspruche 1 und 8 umfassen.

Die Aufgabe der vorliegenden Erfindung besteht darin, elektronische Wandler zur Verfügung zu stellen, die gegenüber elektronischen Wandlern ohne PFC zur Bildung eines elektronischen Wandlers mit PFC keine zusätzliche Steuerung und keinen zusätzlichen Schalter erfordern.

Diese Aufgabe wird gelöst durch einen elektronischen Wandler mit den Merkmalen von Patentanspruch 1 sowie durch einen elektronischen Wandler mit den Merkmalen von Patentanspruch 8.

Der Erfindung liegt die Idee zugrunde, die Bezugspotentiale der Steuerschaltung einerseits und der PFC andererseits voneinander zu trennen.

Die jeweilige Topologie wird derart umgezeichnet, dass der Strommessfühler (Shunt, RS) ausschließlich in Serie zur Primärseite der Last zu liegen kommt. Dabei kann es nötig sein, dass sich die PFC an Plus orientiert und/ oder dass die Steuerschaltung auf Hochfrequenzpotential gelegt wird. Auf diese Weise wird - im Gegensatz zum Stand der Technik - die Strommessung durch keinerlei Signale aus der PFC oder auch aus beliebigen sonstigen verlustarmen Snubbern (meist Resonanzkreise) gestört.

Schließlich wird bevorzugt das Bezugspotential der Steuerschaltung so gelegt, dass bei eingeschaltetem Schalter, wobei insbesondere ein Leistungstransistor in Betracht kommt, ein positives Messsignal am Strommesseingang der Steuerschaltung anliegt. Die Reihenfolge von Primärseite der Last, Bezugspotential der Steuerschaltung und Strommessfühler kann dabei beliebig sein. Das Bezugspotential der Steuerschaltung kann also auch zwischen Stromessfühler und Primärseite der Last liegen.

In einer besonders vorteilhaften Variante der Erfindung wird der Strommessfühler durch eine Diode, insbesondere eine Schottkydiode, derart überbrückt, dass keine negativen Signale am Strommess-Eingang der Steuerschaltung anliegen können.

Weitere vorteilhafte Weiterbildungen der Erfindung sind in den Unteransprüchen definiert.

## Beschreibung der Zeichnungen

Im Folgenden werden Ausführungsbeispiele der Erfindung unter Hinweis auf die beigefügten Zeichnungen näher beschrieben. Es stellen dar:

Fig. 1a        einen aus dem Stand der Technik bekannten sogenannten BIFRED-Wandler;

Fig. 1b        einen aus dem Stand der Technik bekannten sogenannten BIBRED-Wandler;

Fig. 1c        einen aus dem Stand der Technik bekannten sogenannten PFC-Flyback-Wandler;

Fig. 2        die aus dem Stand der Technik bekannte Grundstruktur einer PFC-Schaltung;

Fig. 3a        einen erfindungsgemäßen elektronischen Wandler, der auf der bekannten BIFRED-Schaltung basiert;

Fig. 3b-e        Darstellungen des Wandlers aus Fig. 3a, wobei verschiedene Strompfade hervorgehoben sind;

Fig. 3f        einen erfindungsgemäßen elektronischen Wandler, der auf der BIBRED-Schaltung basiert;

Fig. 3g        einen erfindungsgemäßen elektronischen Wandler, der auf der PFC-Flyback-Schaltung basiert; und

Fig. 4        den zeitlichen Verlauf der Ströme $I_{L1}$, $I_{S1}$ und $I_{D2}$ für die Schaltungsanordnung von Fig. 3a.

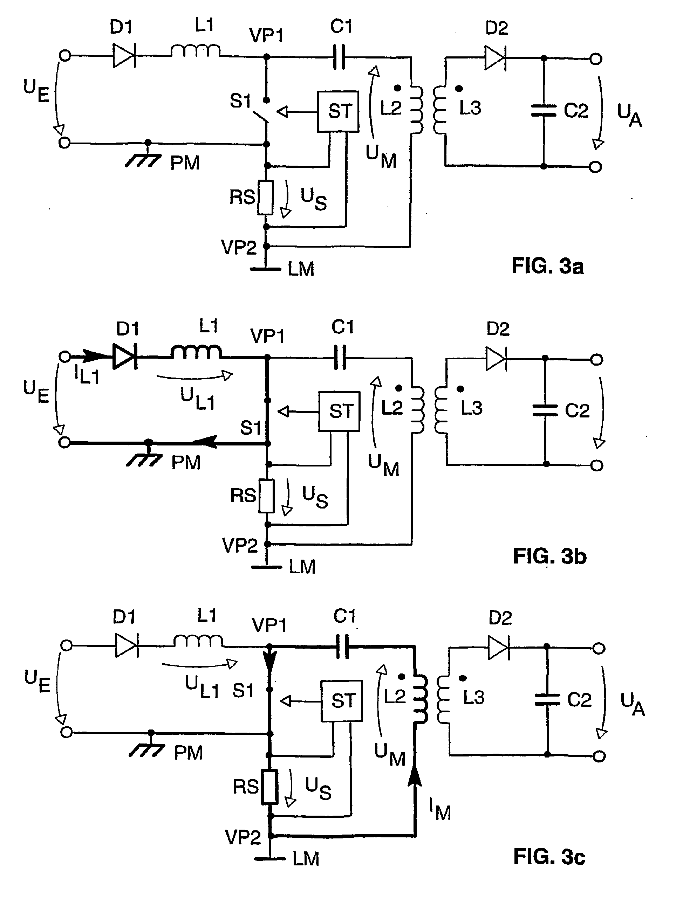

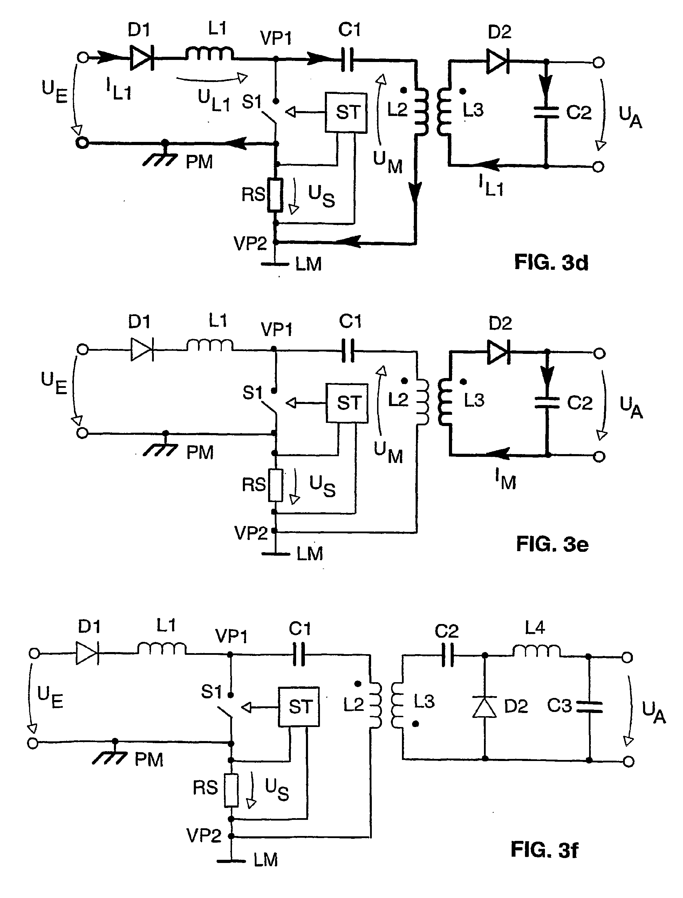

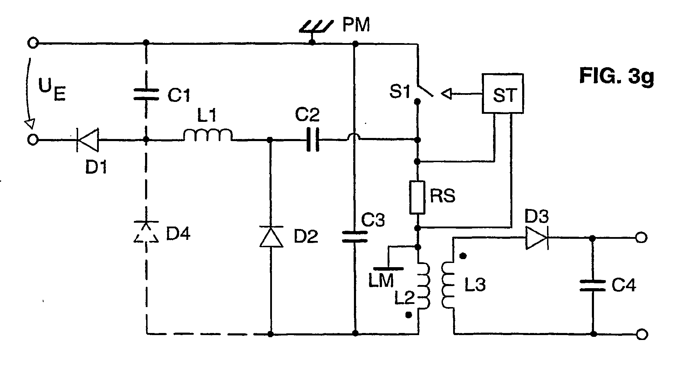

Die in Fig. 3 dargestellten erfindungsgemäßen elektronischen Wandlerschaltungen gehen zurück auf die in Fig. 1 dargestellten elektronischen Wandlerschaltungen, wobei entsprechende Bauelemente mit entsprechenden Bezugszeichen gekennzeichnet sind und daher nicht nochmals erläutert werden. Die erfindungsgemäße Idee ist in den elektronischen Wandlern von Fig. 3 darin realisiert, dass jede Schaltung über eine separate Logikmasse LM und eine separate Leistungsmasse (Powermasse) PM verfügt.

Bei den Schaltungsvarianten gemäß Fig. 3a und 3f ist der Verbindungspunkt zwischen dem Sensorwiderstand RS, der hier die Aufgabe des Strommessfühlers übernimmt, und dem zweiten Anschluss der induktiven Kopplung L2 mit einer Logikmasse LM verbunden, während die zweite Eingangsklemme mit einer Leistungsmasse PM verbunden ist. Bei dem elektronischen Wandler gemäß Fig. 3g ist die erfindungsgemäße Idee dadurch realisiert, dass der Verbindungspunkt zwischen dem Sensorwiderstand RS und dem ersten Anschluss der induktiven Kopplung L2 mit einer Logikmasse LM verbunden ist, während die erste Eingangsklemme mit einer Leistungsmasse PM verbunden ist.

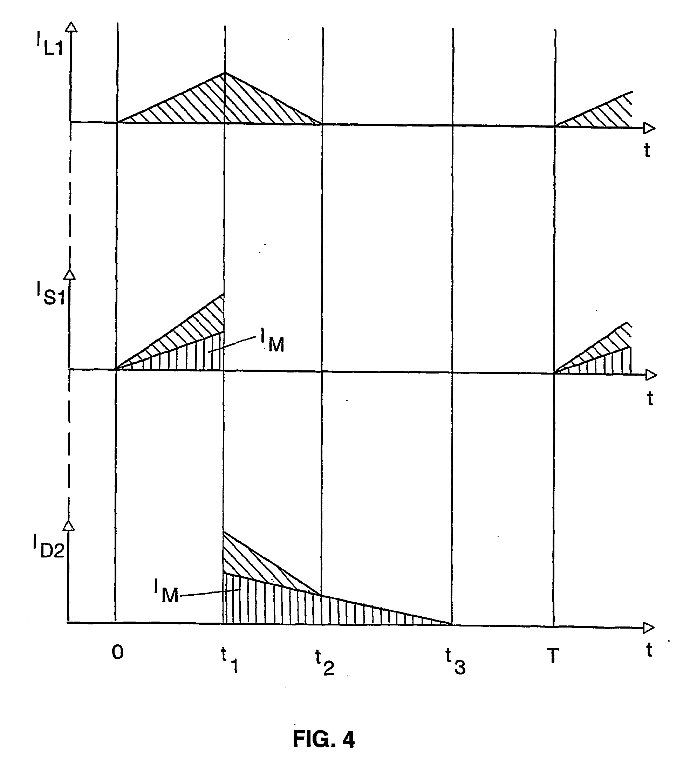

In überraschender Weise wird durch diese Schaltungsmaßnahme von dem jeweiligen Wandler nicht nur seine Wandlungsaufgabe erfüllt, sondern auch die PFC. Im Folgenden wird dies am Beispiel der Schaltungsanordnung von Fig. 3a in Zusammenschau mit den Fig. 3b bis 3e sowie Fig. 4 gezeigt:

Zu diesem Zweck sind in den Fig. 3b bis 3e die Strompfade der Ströme $I_{L1}$ und $I_M$ hervorgehoben. In Fig. 4 ist der zeitliche Verlauf der Ströme $I_{L1}$ durch die Induktivität L1, $I_{S1}$ durch den Schalter S1, $I_{D2}$ durch die Diode D2 sowie IM über der Zeit aufgetragen. Eine Periode erstreckt sich über die Zeitpunkte 0 bis T. Dabei korrespondieren der zeitliche Verlauf des Stromes $I_{L1}$ in Fig. 4 mit den hervorgehobenen Strompfaden in den Fig. 3b und 3d (nur Primärkreis), der zeitliche Verlauf des Stromes $I_{S1}$ mit den hervorgehobenen Strompfaden in den Fig. 3b und 3c sowie der zeitliche Verlauf des Stromes $I_{D2}$ mit den hervorgehobenen Strompfaden in den Fig. 3d (nur Sekundärkreis) und 3e.

Die Zeitpunkte 0 bis t seien wie folgt definiert:

Zeitpunkt 0: Schalter S1 ein

Zeitraum zwischen 0 und $t_1$: S1 und D1 an

$U_{L1}$ = $|U_E|$; $U_M$= $U_{C1}$ ; In S1 addieren sich die Ströme $I_{L1}$ und $I_M$.

Zeitpunkt $t_1$: Schalter S1 aus

Zeitraum zwischen $t_1$ und $t_2$: D1 und D2 an

$U_{L1}$=$|U_E|$-$U_{C1}$-$U_{A;}$ $U_M$=-$U_A$; In D2 addieren sich der transformatorisch übertragene Strom $I_{L1}$ und der gespeicherte Strom IM.

Zeitpunkt $t_2$: D1 schaltet aus

Zeitraum zwischen $t_2$ und $t_3$: D2 an

$$U_{L1}=0; \quad U_M=-U_A$$

Zeitpunkt $t_3$: D2 schaltet aus

Zeitraum zwischen $t_3$ und T: Ruhephase; kein Strom fließt; Zeichen für lückenden Betrieb.

Zur Vereinfachung des Nachweises werden folgende Annahmen getroffen: $U_A$=konst; $U_{C1}$=konst. Ferner gilt: $U_A < U_{C1}$. Das Windungsverhältnis der induktiven Kopplung ist 1:1.

Jeweils innerhalb einer Halbwelle der Netzspannung und lückendem Betrieb ergeben sich folgende Verhältnisse:

$$t \leq t_1: \quad I_{L1} = \frac{|U_E|}{L1}t; \quad \hat{I}_{L1} = \frac{|U_E|}{L1}t_1;$$

$$t > t_1: \quad I_{L1} = \frac{|U_E|}{L1}t1 + \frac{|U_E|-U_{C1}-U_A}{L1}(t-t_1);$$

Da zum Zeitpunkt $t_2$ gilt: $I_{L1} = 0$, folgt

$$t_2 = \frac{(U_{C1}+U_A)}{(U_{C1}+U_A-|U_E|)}t_1;$$

entsprechend

$$t_2-t_1 = \left(\frac{|U_E|}{U_{C1}+U_A-|U_E|}\right)t_1;$$

$$|I_E| = \frac{1}{T}\int_0^T I_{L1}\,dt = \frac{\hat{I}_{L1}}{2T}(t_1+t_2-t_1) = \frac{|U_E|}{2L_1 T}t_1 t_2 = \frac{|U_E|}{2L_1 T}t_1^2\left(\frac{U_{C1}+U_A}{U_{C1}+U_A-|U_E|}\right);$$

Daraus folgt in einer ersten Näherung:

$$|I_E| \sim |U_E| \quad \text{und} \quad |I_E| \sim t_1^2$$

Mit $|I_E| - |U_E|$ ist schon hier gezeigt, dass die Schaltung zusätzlich zu ihrer eigentlichen Wandlerfunktion eine PFC bewirkt.

Wenn gezeigt werden kann, dass der Ausgangsstrom $I_A$ proportional zum Eingangsstrom $I_E$ ist, dann steht fest, dass die Schaltung trotz der PFC-Funktion auch ihre Wandlerfunktion erfüllt.

Für $t \leq t_1$ gilt andererseits:

$$I_M = \frac{U_E}{L2}t; \quad \hat{I}_M = \frac{U_E}{L2}t_1;$$

Für $t > t_1$:

$$I_M = \frac{U_E}{L2}t_1 - \frac{U_A}{L2}(t-t_1);$$

Da IM zum Zeitpunkt $t_3$ gleich 0 ist, ergibt sich

$$t_3 = \frac{U_{C1}+U_A}{U_A}t_1;$$

**entsprechend**

$$t_3 - t_1 = \frac{U_{C1}}{U_A}t_1.$$

Andererseits gilt:

$$I_A = \frac{1}{T}\int_0^T I_{D2}\,dt = \frac{1}{T}\int_{t1}^{t2} I_{L1}\,dt + \frac{1}{T}\int_{t1}^{t3} I_M\,dt = \frac{\hat{I}_{L1}}{2T}(t_2-t_1) + \frac{\hat{I}_M}{2T}(t_3-t_1) =$$

$$= \frac{|U_E|t_1^2}{2L_1T}\left(\frac{|U_E|}{U_{C1}+U_A-|U_E|}\right) + \frac{U_{C1}t_1^2}{2L_2T}\cdot\frac{U_{C1}}{U_A}$$

Hieraus lässt sich feststellen, dass
$I_A \sim t_1^2$ und $I_A - |I_E|$ ist:
Innerhalb des Wandlers stimmt daher die Energiebilanz und hohe Wirkungsgrade sind möglich.

In einer weiteren, nicht dargestellten Ausführungsform der Erfindung kann die induktive Kopplung auch durch eine einzelne Spule realisiert sein, an deren erstem Anschluss der erste Anschluss der Primärseite mit dem ersten Anschluss der Sekundärseite der induktiven Kopplung verbunden ist, und an deren zweitem Anschluss der zweite Anschluss der Primärseite mit dem zweiten Anschluss der Sekundärseite der induktiven Kopplung verbunden ist.

**Patentansprüche**

1.  Elektronischer Wandler mit
    einem Eingangskreis und einem Ausgangskreis, die über eine induktive Kopplung (L2, L3) miteinander verbunden sind, wobei
der Ausgangskreis aufweist:

- eine erste und eine zweite Ausgangsklemme, zwischen denen eine Ausgangsspannung ($U_A$) bereitstellbar ist;

der Eingangskreis aufweist:

- eine erste und eine zweite Eingangsklemme zum Anschließen einer Spannungsquelle ($U_E$), die zumindest einen Gleichspannungsanteil aufweist;
- eine seriell zwischen der ersten Eingangsklemme und einem ersten Anschluss der induktiven Kopplung angeordnete Serienschaltung aus einer Induktivität (L1) und einem Kondensator (C1), wobei der Verbindungspunkt (VP1) zwischen der Induktivität und dem Kondensator über einen elektronischen Schalter (S1) mit der zweiten Eingangsklemme verbunden ist und die Induktivität (L1) zwischen dem Verbindungspunkt (VP1) und der ersten Eingangsklemme und der Kondensator (C1) zwischen dem Verbindungspunkt (VP1) und dem ersten Anschluss der induktiven Kopplung (L2, L3) angeordnet ist;

**dadurch gekennzeichnet,**
**dass** ein Sensorwiderstand (RS) zwischen dem elektronischen Schalter (S1) und dem zweiten Anschluss der induktiven Kopplung (L2, L3) angeordnet ist, wobei der Verbindungspunkt (VP2) zwischen dem Sensorwiderstand (RS) und dem zweitem Anschluss der induktiven Kopplung (L2, L3) mit einer Logikmasse (LM) verbunden ist und die zweite Eingangsklemme mit einer Leistungsmasse (PM) verbunden ist, wobei Leistungsmasse und Logikmasse auf unterschiedlichem elektrischem Potential liegen und
**dass** der der Eingangskreis eine Steuerschaltung (ST) aufweist, der zumindest die Ausgangsspannung und die am Sensorwiderstand (RS) abfallende Spannung (US) als Eingangssignale zuführbar sind, wobei die Steuerschaltung (ST) in Abhängigkeit der ihr zugeführten Eingangssignale den Schalter (S1) öffnet und schließt.

2. Elektronischer Wandler nach Anspruch 1,
**dadurch gekennzeichnet,**
**dass** zwischen der ersten Eingangsklemme und der Induktivität (L1) eine Diode (D1) angeordnet ist.

3. Elektronischer Wandler nach einem der Ansprüche 1 oder 2,
**dadurch gekennzeichnet,**
**dass** die induktive Kopplung (L2, L3) eine Speicherspule umfasst.

4. Elektronischer Wandler nach einem der Ansprüche 1 oder 2,
**dadurch gekennzeichnet,**
**dass** die induktive Kopplung (L2, L3) einen Wechselspannungsübertrager umfasst, wobei die Primärseite (L2) des Wechselspannungsübertragers Teil des Eingangskreises und die Sekundärseite (L3) des Wechselspannungsübertragers Teil des Ausgangskreises ist.

5. Elektronischer Wandler nach einem der Ansprüche 3 oder 4,
**dadurch gekennzeichnet,**
**dass** eine Serienschaltung aus der Sekundärseite des Wechselspannungsübertragers (L3) und einem Kondensator (C2) parallel zu einer Ausgangdiode (D2) angeordnet ist.

6. Elektronischer Wandler nach Anspruch 5,
**dadurch gekennzeichnet,**
**dass** die Ausgangsklemmen parallel zu dem Kondensator (C2) angeordnet sind.

7. Elektronischer Wandler nach Anspruch 5,
**dadurch gekennzeichnet,**
**dass** die hierdurch gebildete Parallelschaltung seriell zu einer Induktivität (L4) angeordnet ist und die hierdurch gebildete Serienschaltung parallel zu den Ausgangsklemmen und einem dazwischen angeordneten zweiten Kondensator (C3) angeordnet ist.

8. Elektronischer Wandler mit
einem Eingangskreis und einem Ausgangskreis, die über eine induktive Kopplung (L2, L3) miteinander verbunden sind, wobei

der Ausgangskreis aufweist:

- eine erste und eine zweite Ausgangsklemme, zwischen denen eine Ausgangsspannung ($U_A$) bereitstellbar ist;

der Eingangskreis aufweist:

- eine erste und eine zweite Eingangsklemme zum Anschließen einer Spannungsquelle ($U_E$), die zumindest einen Gleichspannungsanteil aufweist;
- ein elektronischer Schalter (S1), dessen erster Anschluss mit der ersten Eingangsklemme verbunden ist;
- eine seriell zwischen der zweiten Eingangsklemme und dem zweiten Anschluss des Schalters (S1) angeordnete Serienschaltung aus einer Induktivität (L1) und einem Kondensator (C2), wobei der Verbindungspunkt zwischen der Induktivität (L1) und dem Kondensator (C2) über eine Diode (D2) mit dem ersten Anschluss der induktiven Kopplung (L2, L3) verbunden ist, der die Induktivität (L1) zwischen dem Verbindungspunkt und der zweiten Eingangsklemme und der Kondensator (C2) zwischen dem Verbindungspunkt und dem zweiten Anschluss des Schalters (S1) angeordnet ist;
- einem zwischen der ersten Eingangsklemme und dem ersten Anschluss der induktiven Kopplung (L2, L3) angeordneter Speicherkondensator (C3);

**dadurch gekennzeichnet,**
**dass** ein Sensorwiderstand (RS) zwischen dem elektronischen Schalter (S1) und dem zweiten Anschluss der induktiven Kopplung (L2, L3) angeordnet ist, wobei der Verbindungspunkt zwischen dem Sensorwiderstand (RS) und dem zweiten Anschluss der induktiven Kopplung (L2, L3) mit einer Logikmasse (LM) verbunden ist und die erste Eingangsklemme mit einer Leistungsmasse (PM) verbunden ist, wobei Leistungsmasse und Logikmasse auf unterschiedlichem elektrischem Potential liegen und
**dass** der Eingangskreis eine Steuerschaltung (ST) aufweist, der zumindest die Ausgangsspannung und die am Sensorwiderstand (RS) abfallende Spannung (US) als Eingangssignale zuführbar sind, wobei die Steuerschaltung (ST) in Abhängigkeit der ihr zugeführten Eingangssignale den Schalter (S1) öffnet und schließt.

9. Elektronischer Wandler nach Anspruch 8,
**dadurch gekennzeichnet,**
**dass** zwischen der Induktivität (L1) und der zweiten Eingangsklemme eine erste Eingangsdiode (D1) angeordnet ist.

10. Elektronischer Wandler nach Anspruch 9,
**dadurch gekennzeichnet,**
**dass** der Verbindungspunkt zwischen der ersten Eingangsdiode (D1) und der Induktivität (L1) über einen Kondensator (C1) mit der ersten Eingangsklemme verbunden ist.

11. Elektronischer Wandler nach Anspruch 9 oder 10,
**dadurch gekennzeichnet,**
**dass** der Verbindungspunkt zwischen der ersten Eingangsdiode (D1) und der Induktivität (L1) über eine zweite Eingangsdiode (D4) mit dem zweiten Anschluss der induktiven Kopplung (L2, L3) verbunden ist.

12. Elektronischer Wandler nach einem der Ansprüche 8 bis 11,
**dadurch gekennzeichnet,**
**dass** die induktive Kopplung (L2, L3) eine Speicherspule umfasst.

13. Elektronischer Wandler nach einem der Ansprüche 8 bis 11,
**dadurch gekennzeichnet,**
**dass** die induktive Kopplung (L2, L3) einen Wechselspannungs-übertrager umfasst, wobei die Primärseite (L2) des Wechselspannungsübertragers Teil des Eingangskreises und die Sekundärseite (L3) des Wechselspannungsübertragers Teil des Ausgangskreises ist.

14. Elektronischer Wandler nach einem der Ansprüche 12 oder 13,
**dadurch gekennzeichnet,**
**dass** zwischen den Ausgangsklemmen eine Parallelschaltung aus einem Kondensator (C4) und einer Serienschaltung der Speicherspule (L3) und einer Ausgangsdiode (D3) angeordnet ist.

15. Elektronischer Wandler nach einem der vorhergehenden Ansprüche,

**dadurch gekennzeichnet,**
**dass** parallel zum Sensorwiderstand (RS) eine Diode, insbesondere eine Schottkydiode, angeordnet ist.

**Claims**

1. Electronic converter having
   an input circuit and an output circuit which are connected to one another via an inductive coupling (L2, L3), with the output circuit having:

   - a first and a second output terminal, between which an output voltage ($U_A$) can be produced;
   the input circuit having:
   - a first and a second input terminal for connection of a voltage source ($U_E$) which has at least one DC voltage component;
   - a series circuit which is arranged in series between the first input terminal and a first connection of the inductive coupling and comprises an inductance (L1) and a capacitor (C1) with the junction point (VP1) between the inductance and the capacitor being connected via an electronic switch (S1) to the second input terminal, and the inductance (L1) being arranged between the junction point (VP1) and the first input terminal, and the capacitor (C1) being arranged between the junction point (VP1) and the first connection of the inductive coupling (L2, L3);

   **characterized**
   **in that**
   a sensor resistor (RS) is arranged between the electronic switch (S1) and the second connector of the inductive coupling (L2, L3), with the junction point (VP2) between the sensor resistor (RS) and the second connection of the inductive coupling (L2, L3) being connected to a logic ground (LM), and the second input terminal being connected to a power ground (PM), with the power ground and logic ground being at different electrical potentials, and in that the input circuit has a control circuit (ST), to which at least the output voltage and the voltage (US) dropped across the sensor resistor (RS) can be supplied as input signals, with the control circuit (ST) opening and closing the switch (S1) as a function of the input signal supplied to it.

2. Electronic converter according to Claim 1,
   **characterized**
   **in that**
   a diode (D1) is arranged between the first input terminal and the inductance (L1).

3. Electronic converter according to one of Claims 1 or 2,
   **characterized**
   **in that**
   the inductive coupling (L2, L3) comprises a storage coil.

4. Electronic converter, according to one of Claims 1 or 2,
   **characterized**
   **in that**
   the inductive coupling (L2, L3) has an AC transformer, with the primary (L2) of the AC transformer being part of the input circuit, and the secondary (L3) of the AC transformer being part of the output circuit.

5. Electronic converter according to one of Claims 3 or 4,
   **characterized**
   **in that**
   a series circuit comprising the secondary of the AC transformer (L3) and a capacitor (C2) is arranged in parallel with an output diode (D2).

6. Electronic converter according to Claim 5,
   **characterized**
   **in that**
   the output terminals are arranged in parallel with the capacitor (C2).

7. Electronic converter according to Claim 5,

**characterized**
**in that**
the parallel circuit formed in this way is arranged in series with an inductance (L4), and the series circuit formed in this way is arranged in parallel with the output terminals and a second capacitor (C3) which is arranged in between.

8. Electronic converter having
an input circuit and an output circuit which are connected to one another via an inductive coupling (L2, L3) with the output circuit having:

- a first and a second output terminal, between which an output voltage ($U_A$) can be produced;
the input circuit having:
- a first and a second input terminal for connection of a voltage source ($U_E$) which has at least one DC voltage component;
- an electronic switch (S1) whose first connection is connected to the first input terminal;
- a series circuit, which is arranged in series between the second input terminal and the second connection of the switch (S1) and comprises an inductance (L1) and a capacitor (C2), with the junction point between the inductance (L1) and the capacitor (C2) being connected via a diode (D2) to the first connection of the inductive coupling (L2, L3), to which the inductance (L1) being arranged between the junction point and the second input terminal and the capacitor (C2) being arranged between the junction point and the second connection of the switch (S1);
- a storage capacitor (C3) which is arranged between the first input terminal and the first connection of the inductive coupling (L2, L3);
**characterized in that**
a sensor resistor (RS) is arranged between the electronic switch (S1) and the second connector of the inductive coupling (L2, L3), with the junction point between the sensor resistor (RS) and the second connection of the inductive coupling (L2, L3) being connected to a logic ground (LM), and the first input terminal being connected to a power ground (PM), with the power ground and logic ground being at different electrical potentials, and **in that** the input circuit has a control circuit (ST), to which at least the output voltage and the voltage (US) dropped across the sensor resistor (RS) can be supplied as input signals, with the control circuit (ST) opening and closing the switch (S1) as a function of the input signals supplied to it.

9. Electronic converter according to Claim 8,
**characterized**
**in that**
a first input diode (D1) is arranged between the inductance (L1) and the second input terminal.

10. Electronic converter according to Claim 9,
**characterized**
**in that**
the junction point between the first input diode (D1) and the inductance (L1) is connected via a capacitor (C1) to the first input terminal.

11. Electronic converter according to Claim 9 or 10,
**characterized**
**in that**
the junction point between the first input diode (D1) and the inductance (L1) is connected via a second input diode (D4) to the second connection of the inductive coupling (L2, L3).

12. Electronic converter according to one of Claims 8 to 11,
**characterized**
**in that**
the inductive coupling (L2, L3) comprises a storage coil.

13. Electronic converter according to one of Claims 8 to 11,
**characterized**
**in that**
the inductive coupling (L2, L3) has an AC transformer, with the primary (L2) of the AC transformer being part of the input circuit, and the secondary (L3) of the AC transformer being part of the output circuit.

**14.** Electronic converter according to one of Claims 12 or 13,
**characterized**
**in that**
a parallel circuit comprising a capacitor (C4) and a series circuit formed by the storage coil (L3) and an output diode (D3) is arranged between the output terminals.

**15.** Electronic converter according to one of the preceding claims,
**characterized**
**in that**
a diode, in particular a Schottky diode, is arranged in parallel with the sensor resistor (RS).

**Revendications**

**1.** Convertisseur électronique avec
un circuit d'entrée et un circuit de sortie, reliés entre eux via un couplage inductif (L2, L3),
le circuit de sortie comportant :

- une première et une deuxième borne de sortie, entre lesquelles peut être fournie une tension de sortie ($U_A$) ;

le circuit d'entrée comportant :

- une première et une deuxième borne d'entrée pour connecter une source de tension ($U_E$) ayant au moins une composante continue ;
- un montage en série composé d'une inductance (L1) et d'un condensateur (C1), disposé en série entre la première borne d'entrée et une première borne du couplage inductif, le point de liaison (VP1) entre ladite inductance et ledit condensateur étant relié via un interrupteur électronique (S1) à la deuxième borne d'entrée, et l'inductance (L1) étant disposée entre le point de liaison (VP1) et la première borne d'entrée et le condensateur (C1) entre le point de liaison (VP1) et la première borne du couplage inductif (L2, L3) ;

**caractérisé**
**en ce qu'**une résistance de capteur (RS) est disposée entre l'interrupteur électronique (S1) et la deuxième borne du couplage inductif (L2, L3), le point de liaison (VP2) entre ladite résistance de capteur (RS) et ladite deuxième borne du couplage inductif (L2, L3) étant relié à une masse logique (LM) et la deuxième borne d'entrée étant reliée à une masse de puissance (PM), ladite masse de puissance et ladite masse logique se trouvant à un potentiel électrique différent, et
**en ce que** le circuit d'entrée comporte un circuit de commande (ST) auquel peuvent être envoyées comme signaux d'entrée au moins la tension de sortie et la tension (US) en chute au niveau de la résistance de capteur (RS), le circuit de commande (ST) ouvrant et fermant l'interrupteur (S1) en fonction des signaux d'entrée qui lui sont envoyés.

**2.** Convertisseur électronique selon la revendication 1,
**caractérisé**
**en ce qu'**une diode (D1) est disposée entre la première borne d'entrée et l'inductance (L1).

**3.** Convertisseur électronique selon l'une des revendications 1 ou 2,
**caractérisé**
**en ce que** le couplage inductif (L2, L3) comprend une bobine d'accumulation.

**4.** Convertisseur électronique selon l'une des revendications 1 ou 2,
**caractérisé**
**en ce que** le couplage inductif (L2, L3) comprend un transformateur de courant alternatif, le côté primaire (L2) du transformateur de courant alternatif faisant partie du circuit d'entrée et le côté secondaire (L3) du transformateur de courant alternatif faisant partie du circuit de sortie.

**5.** Convertisseur électronique selon l'une des revendications 3 ou 4,
**caractérisé**
**en ce qu'**un montage en série composé du côté secondaire du transformateur de courant alternatif (L3) et d'un condensateur (C2) est disposé en parallèle à une diode de sortie (D2).

**6.** Convertisseur électronique selon la revendication 5,
**caractérisé**
**en ce que** les bornes de sortie sont disposées en parallèle au condensateur (C2).

**7.** Convertisseur électronique selon la revendication 5,
**caractérisé**
**en ce que** le montage en parallèle ainsi formé est disposé en série avec une inductance (L4) et le montage en série ainsi formé est disposé en parallèle aux bornes de sortie et à un deuxième condensateur (C3) monté entre celles-ci.

**8.** Convertisseur électronique avec
un circuit d'entrée et un circuit de sortie, reliés entre eux via un couplage inductif (L2, L3),
le circuit de sortie comportant :

- une première et une deuxième borne de sortie, entre lesquelles peut être fournie une tension de sortie ($U_A$) ;

le circuit d'entrée comportant :

- une première et une deuxième borne d'entrée pour connecter une source de tension ($U_E$) ayant au moins une composante continue ;
- un interrupteur électronique (S1) dont la première borne est reliée à la première borne d'entrée ;
- un montage en série composé d'une inductance (L1) et d'un condensateur (C2), disposé en série entre la deuxième borne d'entrée et la deuxième borne de l'interrupteur (S1), le point de liaison entre ladite inductance (L1) et ledit condensateur (C2) étant relié via une diode (D2) à la première borne du couplage inductif (L2, L3), et l'inductance (L1) étant disposée entre le point de liaison et la deuxième borne d'entrée et le condensateur (C2) entre le point de liaison et la deuxième borne de l'interrupteur (S1) ;
- un condensateur d'accumulation (C3) disposé entre la première borne d'entrée et la première borne du couplage inductif (L2, L3) ;

**caractérisé**
**en ce qu'**une résistance de capteur (RS) est disposée entre l'interrupteur électronique (S1) et la deuxième borne du couplage inductif (L2, L3), le point de liaison entre ladite résistance de capteur (RS) et ladite deuxième borne du couplage inductif (L2, L3) étant relié à une masse logique (LM) et la deuxième borne d'entrée étant reliée à une masse de puissance (PM), ladite masse de puissance et ladite masse logique se trouvant à un potentiel électrique différent, et
**en ce que** le circuit d'entrée comporte un circuit de commande (ST) auquel peuvent être envoyées comme signaux d'entrée au moins la tension de sortie et la tension (US) en chute au niveau de la résistance de capteur (RS), ledit circuit de commande (ST) ouvrant et fermant l'interrupteur (S1) en fonction des signaux d'entrée qui lui sont envoyés.

**9.** Convertisseur électronique selon la revendication 8,
**caractérisé**
**en ce qu'**une diode d'entrée (D1) est disposée entre l'inductance (L1) et la deuxième borne d'entrée.

**10.** Convertisseur électronique selon la revendication 9,
**caractérisé**
**en ce que** le point de liaison entre la première diode d'entrée (D1) et l'inductance (L1) est relié via un condensateur (C1) à la première borne d'entrée.

**11.** Convertisseur électronique selon la revendication 9 ou 10,
**caractérisé**
**en ce que** le point de liaison entre la première diode d'entrée (D1) et l'inductance (L1) est relié via une deuxième diode d'entrée (D4) à la deuxième borne du couplage inductif (L2, L3).

**12.** Convertisseur électronique selon l'une des revendications 8 à 11,
**caractérisé**
**en ce que** le couplage inductif (L2, L3) comprend une bobine d'accumulation.

**13.** Convertisseur électronique selon l'une des revendications 8 à 11,
**caractérisé**

**en ce que** le couplage inductif (L2, L3) comprend un transformateur de courant alternatif, le côté primaire (L2) du transformateur de courant alternatif faisant partie du circuit d'entrée et le côté secondaire (L3) du transformateur de courant alternatif faisant partie du circuit de sortie.

14. Convertisseur électronique selon l'une des revendications 12 ou 13,
**caractérisé**
**en ce qu'**un montage en parallèle composé d'un condensateur (C4) et d'un montage en série de la bobine d'accumulation (L3) et d'une diode de sortie (D3) est disposé entre les bornes de sortie.

15. Convertisseur électronique selon l'une des revendications précédentes,
**caractérisé**
**en ce qu'**une diode, en particulier une diode Schottky, est disposée en parallèle à la résistance de capteur (RS).

FIG. 1a

FIG. 1b

FIG. 1c

14

**FIG. 2**

Stand der Technik

FIG. 3a

FIG. 3b

FIG. 3c

FIG. 3d

FIG. 3e

FIG. 3f

FIG. 3g

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MICHEL WILLERS et al.** Analysis and Design of a Practical Discontinuous-Conduction-Mode BIFRED Converter. *IEEE Transactions on Industrial Electronics,* August 1999, vol. 46 (4

- **TSAI-FU WU et al.** An Alternative Approach to Synthesizing Single-Stage Converters with Power Factor Correction Feature. *IEEE Transactions on Industrial Electronics,* August 1999, vol. 46 (4